Europäisches Patentamt

European Patent Office

Office européen des brevets

(11) Veröffentlichungsnummer: **0 167 101**
**A2**

(12) # EUROPÄISCHE PATENTANMELDUNG

(21) Anmeldenummer: 85107905.3

(22) Anmeldetag: 26.06.85

(51) Int. Cl.⁴: **C 01 B 3/38**
**C 10 J 3/00**

(30) Priorität: 30.06.84 DE 3424208

(43) Veröffentlichungstag der Anmeldung:
08.01.86 Patentblatt 86/2

(84) Benannte Vertragsstaaten:
AT BE CH DE FR GB IT LI LU NL SE

(71) Anmelder: Kernforschungsanlage Jülich Gesellschaft
mit beschränkter Haftung
Postfach 1913
D-5170 Jülich 1(DE)

(72) Erfinder: Weirich, Walter, Dr.
Bismarckstrasse 59
D-5100 Aachen(DE)

(72) Erfinder: Barnert, Heiko, Dr.
Kopernikusstrasse 20
D-5170 Jülich(DE)

(72) Erfinder: Oertel, Michael
Am Büchel 15
D-5100 Aachen(DE)

(72) Erfinder: Schulten, Rudolf, Prof. Dr.
Karl-Friedrich-Strasse 4
D-5100 Aachen-Richterich(DE)

(54) Verfahren und Vorrichtung zur Umsetzung von Wasserdampf mit Kohle oder Kohlenwasserstoff.

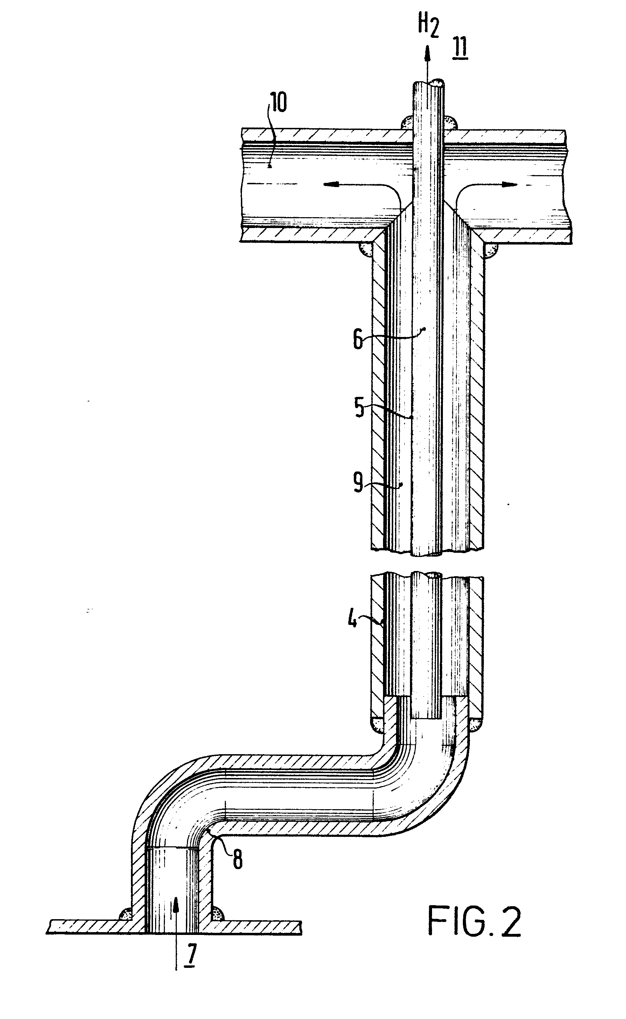

(57) Der Umsatz der Gasreaktionen, die unter Erzeugung von wasserstoffhaltigen Reaktionsmischungen ablaufen, wird dadurch gesteigert, daß der gebildete Wasserstoff kontinuierlich über eine Wasserstoffpermeationswand aus dem Reaktionsraum abgezogen wird. Zu diesem Zweck wird innerhalb eines Reaktionsbehälters (4) ein Raum (6) für die Wasserstoffaufnahme durch eine wasserstoffdurchlässige Wand (5) abgetrennt, der mit Mitteln zum Abführen von Wasserstoff verbunden ist. In diesem Raum wird vorzugsweise eine Stützstruktur vorgesehen zur Aufnahme der druckunterschiedbedingten Kräfte oder ein Inertgasgegendruck, und die wasserstoffdurchlässige Wand wird insbesondere durch eine Membran gebildet, deren Oberfläche durch Wellung oder Fältelung vergrößert ist. Als Vorrichtung besonders geeignet ist ein Rohrreaktor, dessen Innenraum von einer Vielzahl von allgemein rohrförmigen Wasserstoffabzugsräumen durchsetzt wird (Fig. 2).

./...

F G.2

Verfahren und Vorrichtung zur
Umsetzung von Wasserdampf mit Kohle oder
Kohlenwasserstoff

Die Erfindung bezieht sich auf ein Verfahren
und eine Vorrichtung zur Umsetzung von Wasserdampf mit Kohle oder Kohlenwasserstoff unter
Erzeugung einer wassserstoffhaltigen Reaktionsmischung und insbesondere auf die Wassergas-
bzw. Synthesegasherstellung durch Methan-Wasserdampf-Spaltung und Wasserdampf-Kohle-Vergasung.

Die Umsetzung von $CH_4$ und $H_2O$-Dampf zu $CO$, $H_2$
und $CO_2$ in herkömmlichen Steam-Reformern erfolgt bei 700 bis 850°C und Drucken zwischen
20 und 40 bar, wobei ein Produktgas entsteht,
das $H_2$, $CO$, $CO_2$, $H_2O$ und (bezogen auf das trockene
Gas) ca. 8 bis 13 Vol% $CH_4$ enthält.

Die stark endotherme $CH_4/H_2O$-Umsetzung läuft
in außenbeheizten Rohren mit ca. 90 bis 130 mm
Innendurchmesser an Ni-haltigen Katalysatoren
nahe dem thermodynamischen Gleichgewicht ab.
Das nicht umgesetzte Restmethan - 30 bis 40 %
des Edukt-Methans - ist bei den nachfolgenden
Reaktionen des Gases im allgemeinen unerwünscht,
in manchen Fällen sogar schädlich, so daß bei
heute üblichen Anlagen meist eine weitere Umsetzung
des Restmethans mit Sauerstoff bei ca. 1200°C
in einem Sekundärreformer vorgesehen wird. Der
Methangehalt der Reaktionsmischung liegt dann
unter 1 %.

PT 1.735

Hieran schließen sich als weitere Hauptverfahrens- schritte eine Konvertierung, $CO_2$-Wäsche und gegebenenfalls Tieftemperatur-Zerlegung an, bevor das Synthesegas seiner eigentlichen Verwendung zugeführt werden kann.

Ziel der Erfindung ist daher eine Ausgestaltung der Gasreaktion, die zu einem erheblich gesteigerten Umsatz der Ausgangsmischung führt, so daß gegebenenfalls sogar Weiterbehandlungen entfallen können.

Dieses Ziel wird gemäß der Erfindung dadurch erreicht, daß man den gebildeten Wasserstoff kontinuierlich durch eine (zumindest weitgehend) selektiv wasserstoffdurchlässige Trennwand aus dem Reaktionsraum abtrennt.

Auf diese Weise wird eine Umsatzsteigerung und Vereinfachung der Gasaufbereitung erreicht, da - betrachtet am Beispiel der $CH_4/H_2O$-Umsetzung - durch die stetige selektive Wasserstoffabtrennung aus dem Reaktionsraum insgesamt mehr Methan umgesetzt werden kann und folglich entschieden höhere Wasserstoffausbeuten erreichbar sind. Hieraus resultieren eine wesentliche Vereinfachung des bisher üblichen Verfahrens und damit verbunden ein kostengünstigerer Verfahrensablauf.

Die In-Situ-Abtrennung des Wasserstoffs erfolgt über eine für Wasserstoff durchlässige Membran, die in die Reaktionsrohre derart eingebracht ist, daß der gebildete Wasserstoff unmittelbar nach seiner Entstehung entfernt wird.

Ausführliche mathematische und verfahrenstechnische Analysen haben überraschenderweise ergeben, daß die Reaktionsgeschwindigkeit von wasserstofferzeugenden Prozessen, die stark endotherm ablaufen, durch die notwendige Wärmezufuhr (ca. 70 $kW/m^2$ bei der $CH_4/H_2O$-Umsetzung) beherrscht wird und daß der dabei gebildete Wasserstoff über Membranen abgezogen werden kann, deren Fläche in der Größenordnung von derjenigen der notwendigen Heizflächen liegt.

Als Membranmaterial sind alle selektiv wasserstoffdurchlässigen Materialien geeignet, die homogen oder porös sein können und bei hoher Temperatur hinreichend Wasserstoff permeieren lassen. Die Wasserstoffpermeation kann sowohl atomar - im Fall der homogenen Membran - als auch molekular - im Fall einer porösen Membran - erfolgen. Die Membran kann beispielsweise aus einer Pd- oder TiNi-Folie (Dicke 5 bis 100µm) bestehen, welche zur Aufnahme der Druckdifferenz durch eine Stützstruktur wie z.B. ein Stützge-

0167101

webe verstärkt ist. Als poröse Membranen sind z.B. solche mit mikroporösen (im Anström-Bereich) Oberflächen- oder Trennschichten brauchbar, die aus metallischen oder keramischen Verbindungen bestehen. Hier wird die Permeation durch die Knudsen-Diffusion, im vorgehend genannten Fall durch das Fick'sche Gesetz bestimmt.

Durch geeignete Formgebung der Membran kann deren Oberfläche auf ein Vielfaches der geometrisch glatten Fläche vergrößert werden. So kann die Membran beispielsweise gewellt oder gefaltet vorgesehen werden oder auch in Form einer Vielzahl von Rohren mit beliebigem Querschnitt den Reaktionsraum durchsetzen.

Der aus dem Reaktionsraum abdiffundierende Wasserstoff wird vorzugsweise hinter der Membran kontinuierlich abgeführt. Die dadurch ggfs. bedingte Druckdifferenz zwischen dem Reaktionsraum und dem Raum bzw. den Räumen auf der Wasserstoffaustrittsseite der wasserstoffdurchlässigen Wände erfordert üblicherweise eine Abstützung der zur Förderung der Diffusion möglichst dünn gehaltenen Membranen auf der Wasserstoffaustrittsseite. Da für den Wasserstoffdurchtritt durch die Trennwand im wesentlichen nur die Wasserstoffdruckdifferenz maßgebend ist, kann sekundärseitig

0167101

auch ein dem Gasdruck im Reaktionsraum entsprechender Inertgasdruck aufrechterhalten werden.

Zusätzlich kann auch auf der Wasserstoffzutrittsseite statt der üblicherweise eingesetzten katalysatorbeschichteten Raschigringe eine katalysatorbeschichtete Stützstruktur angrenzend an die wasserstoffdurchlässige Wand vorgesehen werden. Hierzu wird ein Grundmaterial, welches zum Beispiel ein Metallgewebe sein kann, mit $Al_2O_3$ oder einem anderen geeigneten Trägermaterial beispielsweise durch Plasmaspritzen beschichtet. Dieses Trägermaterial nimmt dann die feinverteilten katalytisch aktiven Elemente auf. Die katalytische Aktivität kann nicht mit einem reinen Nickelgewebe oder mit einem Ni-beschichteten Edelstahlnetz erzielt werden, da das Nickel bei hohen Temperaturen auf der Oberfläche sintert und ein Grobkorn bildet, wodurch die katalytische Aktivität stark vermindert würde. Mit dem Ersatz der Raschigringe wird zusätzlich der Wärmeübergang auf das Spaltgas erheblich verbessert, so daß die Reformer bei gleicher Leistung kleiner gebaut werden können.

Die sekundärseitige Wasserstoffausbeute ist je nach dem gewählten Druck hinter der Membran (der z.B. bei 1 bis 5 bar liegen kann) genauso groß wie in den bisher üblichen Verfahren oder größer. Das nicht abgetrennte Restgas kann dann zusätzlich zur Befeuerung der Steam-Reformer-Rohre eingesetzt werden. Sekundärreformer und Gastrennanlage sind nach der vorgeschlagenen Verfahrensweise nicht mehr erforderlich, so daß große Kostenvorteile zu erwarten sind.

Die erfindungsgemäße Wasserstoffabtrennung aus dem Reaktionsraum bringt auch wesentliche Vorteile bei der nuklear beheizten Wasserdampf-Kohlevergasung: Bei dieser wird der C-Umsatz, insbesondere bei fortgeschrittener Vergasung, aus Gründen der Kinetik, die wiederum durch den anwesenden Wasserstoff negativ beeinflußt wird, begrenzt. Die erfindungsgemäße Wasserstoffentfernung aus dem Gasgenerator (und damit Verminderung der $H_2$-Konzentration, insbesondere, wenn sekundärseitig für ein möglichst geringen $H_2$-Druck bzw. -Partialdruck gesorgt wird) führt zu einer wesentlich verbesserten Kinetik der Wasserdampf-Kohlevergasung. Damit ergeben sich günstigere Bedingungen für die Einkopplung der nuklearen Hochtemperaturwärme und den gesamten Vergasungsvorgang.

Es folgt ein Ausführungsbeispiel zur Erläuterung der Wirkungsweise der Erfindung. Bei dessen Beschreibung wird auf die angefügten Zeichnungen Bezug genommen; es zeigen schematisch:

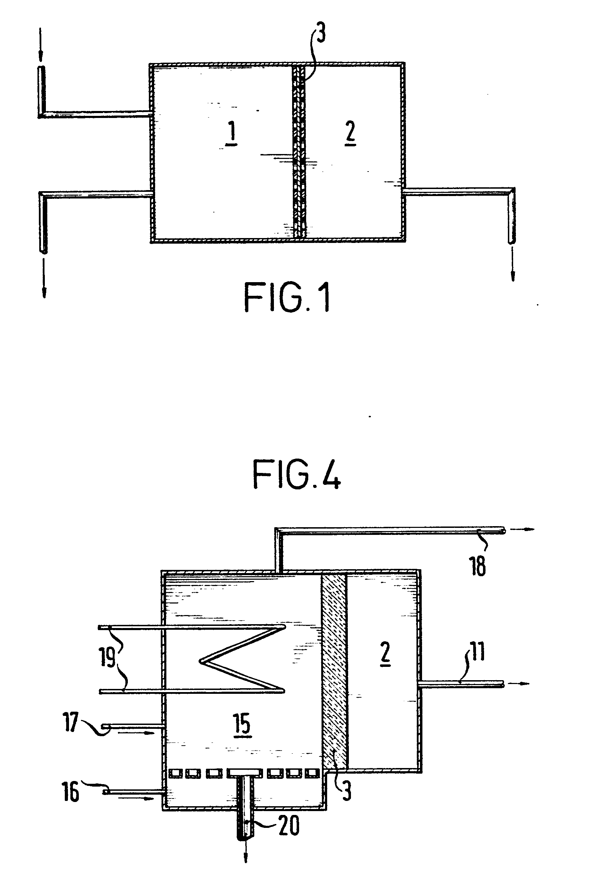

Figur 1     einen vereinfachten Versuchsaufbau
            im Schema;

Figur 2     den allgemeinen Aufbau eines Reformer
            rohres;

Figur 3     a bis d unterschiedliche Reaktorquerschnitte; und

Fig. 4 u. 5 zwei Anordnungen zur Kohlevergasung.


Ausführungsbeispiel


a) Referenzversuch

In einem Autoklaven wurde ein $CH_4/H_2O$-Gemisch (Molverhältnis 1:3) auf 700°C aufgeheizt. Der Gleichgewichtsdruck betrug ca. 10 bar. Im Autoklaven befand sich eine Katalysatorschüttung, bestehend aus Ni auf $Al_2O_3$, ähnlich wie sie in Steam-Reforming Prozessen eingesetzt wird. Nach Erreichen der Endtemperatur wurde nach circa 1 Stunde eine Gasprobe entnommen, deren Analysenergebnis in Tabelle 1, Spalte 3 angeführt ist. Die gefundene Gaszusammensetzung entspricht weitgehend dem thermodynamischen Gleichgewicht der eingesetzten Substanzen bei 700°C und etwa der Gaszusammensetzung, die unter den angeführten Bedingungen in einem Steam-Reforming Prozeß erreicht würde.

b) Versuch mit Wasserstoffabtrennung

In weiteren Experimenten wurde in ein Reaktionsrohr (Länge circa 40 cm, Durchmesser 5 cm) eine Wasserstoffdiffusionsmembran - bestehend aus 60 µm Palladium - derart eingebaut, daß der gebildete Wasserstoff während der Umsetzung aus dem Reaktionsraum abgezogen werden konnte, welcher wiederum mit einer Katalysatorschüttung gefüllt war. Eine prinzipielle Anordnung zeigt Fi. 1: Vom Reaktionsraum 1 wird eine zweites Volumen 2 durch eine Pd-Membran 3 abge_trennt. Zur Aufnahme der Druckdifferenz zwischen Reaktionsraum und Membran (p im Mittel 1,5 bar hinter der Membran) wurde die Membran mit zwei perforierten Lochscheiben verstärkt. Das $CH_4/H_2O$-Verhältnis betrug wiederum 1:3. Durch den Wasserstoffabzug, der bei 700 °C erfolgte, ergaben sich die in Tabelle 1, Spalten 4 und 5 angegebenen Gaszusammensetzungen. Der gebildete Wasserstoff wurde größtenteils direkt in hochreiner Form nach der vorgeschlagenen Verfahrensweise gewonnen. Weitere Gastrennarbeiten entfallen, die bei heutigen Steam-Reforming-Prozessen zur Erzeugung von hochreinem Wasserstoff erforderlich sind. Die Umsetzung der Einsatzstoffe zu Wasserstoff wird mit dem vorgeschlagenen Verfahren um circa 50 % erhöht, wobei davon wiederum circa 2/3 in hochreiner Form vorliegen. Das verbleibende Restgas enthielt nur noch geringe Anteile des Einsatzstoffes $CH_4$.

Tabelle 1

| Mole | Einsatz-stoffe | Produkt ohne $H_2$-Abzug | Produkt (Restgas) mit $H_2$-Abzug | Permeat | Gesamtprodukt mit $H_2$-Abzug |
|---|---|---|---|---|---|
| CO | - | 7,5 | 8,3 | - | 8,3 |
| $CO_2$ | - | 8,6 | 15,6 | - | 15,6 |
| $CH_4$ | 25 | 8,9 | 1,1 | - | 1,1 |
| $H_2$ | - | 56,8 | 25,5 | 61,8 | 87,3 |
| $H_2O$ | 75 | 50,3 | 35,5 | - | 35,5 |

Gemäß Fig. 2 wird im Reformerrohr 4 durch eine Membran 5 ein Wasserstoffabzug 6 abgetrennt.Bei 7 wird die Ausgangsmischung aus dem unteren Gassammelraum über ein Längs- kompensationsrohr 8 in den katalysatorhaltigen Reaktionsraum 9 geleitet. Das Produkt verläßt den Reaktionsraum über den oberen Gassammelraum 10, während bei 11 Wasserstoff abgezogen wird.

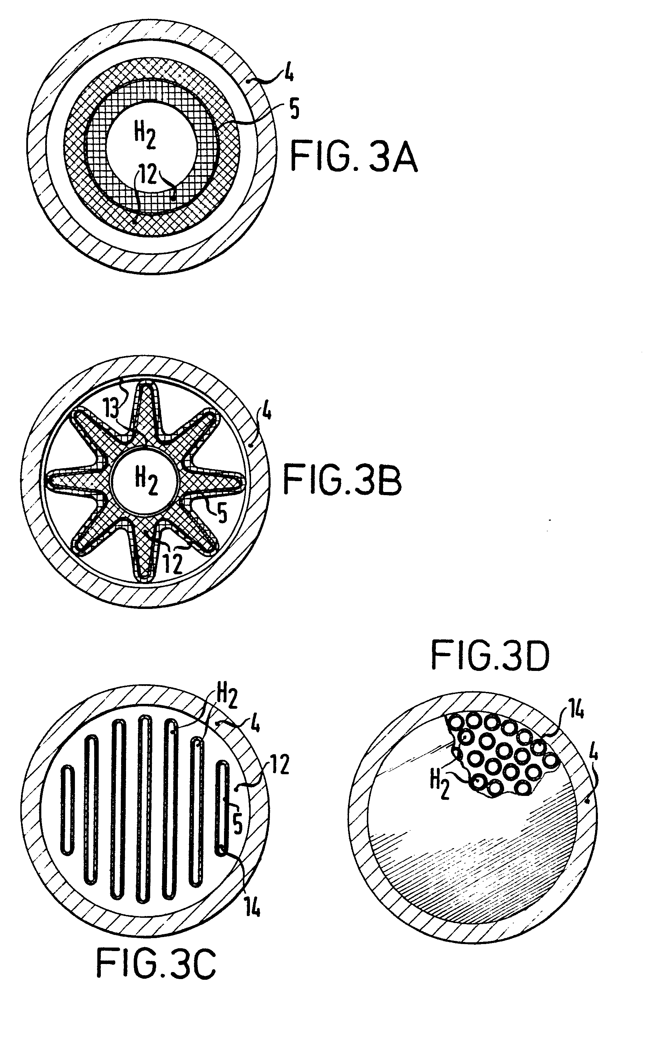

In Fig. 3a bis d sind unterschiedliche Ausgestaltungen des Reformerrohres im Querschnitt gezeigt, und zwar zeigt Fig. 3a einen einfachen Aufbau, bei dem im Reformerrohr 4 eine Membran 5 vorgesehen ist, die beidseits durch ein Stützgewebe 12 gehalten wird. Zusätzlich kann im Raum zwischen Reformerrohr 4 und Membran 5 eine Katalysatorfüllung vorgesehen sein. Alternativ kann auch das an die Wasserstoffzutrittsseite der Membran angrenzende Stützgewebe katalysatorbeschichtet sein und den Reaktionsraum dann im wesentlichen ausfüllen.

Gemäß Fig. 3b ist die Membran 5 gewellt beziehungsweise gefaltet vorgesehen, um ihre Fläche zu vergrößern und den Wasserstoffdurchtritt der Reaktionsgeschwindigkeit anzupassen. Zusätzlich sind Stützringe 13 vorgesehen, die der mechanischen Absteifung der gesamten Anordnung dienen.

Die Figuren 3c und 3d zeigen den Querschnitt eines Reformerrohres 4, dessen Innenraum durch eine Vielzahl von allgemein rohrförmigen Membranen 4 (mit innerem Stützgewebe) unterteilt wird, wobei diese Membranrohre von katalysatorhaltigem bzw. -beschichtetem Stützgewebe umgeben werden. Die Oberfläche der Membran kann beispielsweise entsprechend den gezeigten Querschnitten um den Faktor 1 - 100 vergrößert werden. Im Falle der $CH_4/H_2O$-Reformierung ist die notwendige Membranfläche etwa in der gleichen Größenordnung wie die Fläche, die aus wärmetechnischen Gründen erforderlich ist.

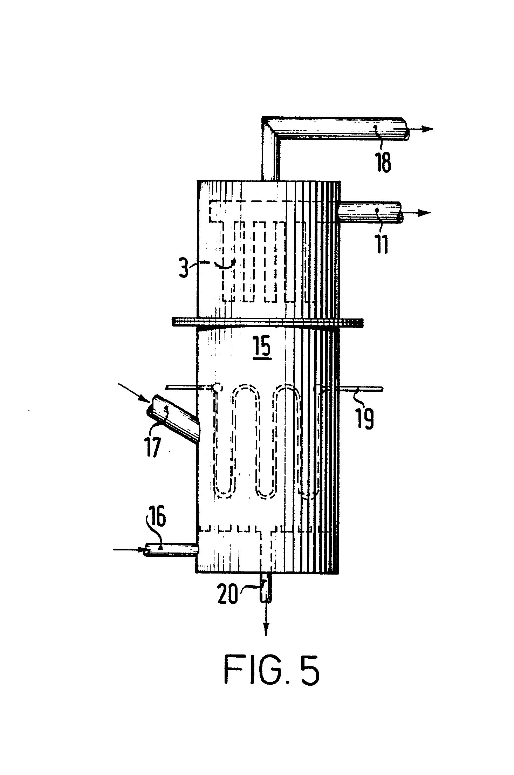

Die in den Figuren 4 und 5 skizzierten Kohlevergasungsreaktoren umfassen einen Gasgenerator 15, der über eine wasserstoffdurchlässige Trennwand 3 mit einem $H_2$-Sammelraum in Verbindung steht.

Der Gasgenerator 15 wird bei 16 bzw. 17 mit
Wasserdampf bzw. Kohle beschickt. Das Produktgas geht bei 18 ab. 19 deutet eine Wärmeeinkopplung an und 20 den Ascheabzug.

Kernforschungsanlage Jülich
Gesellschaft mit beschränkter Haftung


P a t e n t a n s p r ü c h e

1. Verfahren zur Umsetzung von Wasserdampf mit Kohle oder Kohlenwasserstoff unter Erzeugung einer wasserstoffhaltigen Reaktionsmischung, d a d u r c h   g e k e n n z e i c h n e t , daß man den gebildeten Wasserstoff kontinuierlich durch eine (zumindest weitgehend) selektiv wasserstoffdurchlässige Trennwand aus dem Reaktionsraum abtrennt.

2. Verfahren nach Anspruch 1, d a d u r c h   g e k e n n z e i c h n e t , daß es bei Temperaturen von 500 bis 1000°C durchgeführt wird.

3. Verfahren nach Anspruch 1 oder 2, d a d u r c h   g e k e n n z e i c h n e t , daß die Entfernung des Wasserstoffs aus dem Reaktionsraum bei der $CH_4/H_2O$-Reformierung oder der Wassergaserzeugung erfolgt.

4. Vorrichtung zur Durchführung des Verfahrens nach einem der vorangehenden Ansprüche in einem Reaktionsbehälter, g e k e n n z e i c h n e t   d u r c h   einen vom Reaktionsraum (1) innerhalb des Behälters durch eine wasserstoffdurchlässsige Wand (3) abgetrennten Raum (2), der mit Mitteln zum Abtransport von Wasserstoff verbunden ist.

PT 1.735
nö/Fr

5. Vorrichtung nach Anspruch 4, d a d u r c h
g e k e n n z e i c h n e t , daß die wasserstoffdurchlässige Wand durch eine von einer
Stützstruktur gehaltene dünne wasserstoffdurchlässige Membran gebildet wird.

6. Vorrichtung nach Anspruch 4 oder 5, g e k e n n-
z e i c h n e t d u r c h eine durch Wellen
oder Fältelung vergrößerte Membranfläche.

7. Vorrichtung nach einem der Ansprüche 4 bis 6,
d a d u r c h g e k e n n z e i c h n e t ,
daß der Reaktionsbehälter einRohrreaktor ist,
dessen Innenraum von einer Vielzahl von allgemein rohrförmigen Wasserstoffabzugsräumen
durchsetzt wird.

9. Vorrichtung nach einem der Ansprüch 4 bis 7,
d a d u r c h g e k e n n z e i c h n e t ,
daß der Reaktionsraum angrenzend an die wasserstoffdurchlässige Wand eine katalysatorbeschichtete Stützstruktur aufweist.

FIG.1

FIG.4

FIG.2

0167101

FIG. 3A

FIG.3B

FIG.3D

FIG.3C

FIG. 5